# EUROPÄISCHE PATENTANMELDUNG

(11) **EP 2 270 341 A2**
(43) Veröffentlichungstag der Anmeldung: **05.01.2011**
(21) Anmeldenummer: 10165620.5
(22) Anmeldetag: 11.06.2010
(51) Int. Cl.: F15B 15/12, F16J 15/54

(54) **Scheibendichtung, insbesondere für einen Schwenkmotor**

(30) Priorität: 30.06.2009 DE 102009027336
(71) Anmelder: ZF Friedrichshafen AG, 88038 Friedrichshafen (DE)
(72) Erfinder: Reuß, Matthias, 97440 Stettbach (DE); Schlüter, Andreas, 97422 Schweinfurt (DE); Mohr, Frieder, 97421 Schweinfurt (DE)

(57) **Zusammenfassung**

Scheibendichtung (29) innerhalb einer Nut (37), insbesondere für einen Schwenkmotor, umfassend einen Dichtungsrahmen (31), in dem mindestens ein Dichtungsinnenteil (33) angeordnet ist, das den Dichtungsrahmen (31) vorspannt, wobei an mindestens einer Seite zu der Baueinheit Dichtungsrahmen-Dichtungsrinnenteil (31;33) eine scheibenförmige Beilage (35) angeordnet ist, wobei die Scheibendichtung (29) durch Ausnutzung eines Druckmediums zusätzlich vorgespannt wird. Ein geschichtetes Paket, umfassend den Dichtungsrahmen (31) mit Dichtungsinnenteil (33) sowie die mindestens einen scheibenförmigen Beilage (35) ist in Schwenkrichtung innerhalb der Nut (37) spielfrei angeordnet, so dass die gesamte Scheibendichtung (29) ortsfest innerhalb der Nut (37) sitzt, wobei über die mindestens eine Beilage (35) mindestens ein Druckmittelzufuhrquerschnitt zur Baueinheit Dichtungsrahmen-Dichtungsinnenteil (31;33) vorliegt.

## Beschreibung

Die Erfindung betrifft eine Scheibendichtung gemäß dem Oberbegriff von Patentanspruch 1.

Aus der EP 1 150 018 A2 ist eine Scheibendichtung für einen Schwenkmotor bekannt, die einen Dichtungsrahmen umfasst, der von einem elastischen Dichtungsinnenteil vorgespannt wird. Der Dichtungsrahmen und das Dichtungsinnenteil übernehmen die Dichtungsfunktion. Innerhalb einer Nut sind beidseitig zum Dichtungsrahmen und zum Dichtungsinnenteil scheibenförmige Beilagen angeordnet. Die Dichtungsnutbreite ist so dimensioniert, dass die gesamte Scheibendichtung in Schwenkrichtung des Motors schwimmend gelagert ist.

Ein Spalt zwischen einer ersten Beilage einerseits und dem Dichtungsinnenteil mit Dichtungsrahmen anderseits wird zur gezielten Druckmittelzufuhr ausgenutzt, um die Scheibendichtung, d. h. erste Beilage, Dichtungsinnenteil mit Dichtungsrahmen und zweite Beilage, als Paket auf eine dem Druck abgewandten Seite der Nut vorzuspannen, wodurch der Dichtungsrahmen wiederum druckabhängig vorgespannt wird.

Bisher hat man versucht, durch eine Optimierung, insbesondere des Dichtungsinnenteils, eine verbesserte Dichtwirkung zu erreichen, um dadurch Geräusche im Gesamtaggregat zu minimieren. Trotzdem wurde noch kein in jeder Hinsicht zufriedenstellender Entwicklungsstand erreicht.

Die Aufgabe der vorliegenden Erfindung besteht darin, eine Scheibendichtung dahingehend zu optimieren, dass einerseits eine gute Dichtwirkung vorliegt und andererseits die Geräuschbildung minimiert ist.

Erfindungsgemäß wird die Aufgabe dadurch gelöst, ein geschichtetes Paket umfassend den Dichtungsrahmen mit Dichtungsinnenteil sowie der mindestens einen scheibenförmigen Beilage in Schwenkrichtung innerhalb der Nut spielfrei angeordnet ist, so dass die gesamte Scheibendichtung ortsfest innerhalb der Nut sitzt, wobei über die mindestens eine Beilage mindestens eine Druckmittelzufuhrquerschnitt zur Baueinheit Dichtungsrahmen-Dichtungsinnenteil vorliegt.

Durch die ortsfeste Lage der gesamten Scheibendichtung tritt auch bei wechselnder Druckbeaufschlagung der Scheibendichtung keine Relativbewegung zu einer Nutseitenfläche auf. Diese Relativbewegung wird als Ursache für die bisherige Geräuschentwicklung angesehen. Über den mindestens einen Druckmittelzufuhrquerschnitt kann jedoch eine druckabhängige Unterstützung der Vorspannkraft auf den Dichtungsrahmen erreicht werden.

Bei einer ersten Ausführungsform ist mindestens eine Nutseitenwand der Nut mit mindestens einem Anschlusskanal ausgeführt, die an den Druckmittelzufuhrquerschnitt der Beilage angeschlossen ist.

Der Anschlusskanal muss hinsichtlich seines Querschnitts nicht sehr groß ausgeführt sein. Man kann z. B. vorsehen, dass der mindestens eine Anschlusskanal von einer Rändelung einer Nutseitenfläche gebildet wird.

Bei einer Alternativvariante weist die scheibenförmige Beilage in der zum Dichtungsinnenteil weisenden Fläche mindestens einen Anschlusskanal auf. Das Druckmittel kann über den Anschlusskanal in die Ebene zwischen der Beilage und dem Dichtungsrahmen bzw. Dichtungsinnenteil einströmen. Um eine beliebige Einbaulage der scheibenförmigen Beilage in dem Paket ermöglichen zu können, ist die scheibenförmige Beilage an beiden parallel zur Baueinheit Dichtungsrahmen-Dichtungsinnenteil verlaufenden Seitenfläche mit mindestens einem Anschlusskanal ausgeführt.

Des Weiteren besteht die Möglichkeit, dass mindestens eine Stirnfläche der scheibenförmigen Beilage mindestens einen Zuflusskanal als Druckmittelzufuhrquerschnitt aufweist. Über die Stirnflächen kann das Druckmedium dem Dichtungsrahmen zugeführt werden.

Hinsichtlich der Herstellung hat es sich als vorteilhaft herausgestellt, dass der mindestens eine Zuflusskanal in der Stirnfläche geprägt ist. Es können viele kleine Kanäle erzeugt werden, die das Druckmittel gleichmäßig zum Dichtungsrahmen leiten.

Mehrere Anschlusskanäle können miteinander verbunden sein und ein Druckmittelverteilungskanalsystem bilden. Dadurch kann das Druckmittel ebenfalls gleichmäßiger am Dichtungsrahmen wirksam werden.

Anhand der folgenden Figurenbeschreibung soll die Erfindung näher erläutert werden.

Es zeigt:
- Fig. 1: Längsschnittdarstellung durch einen Schwenkmotor
- Fig. 2: Querschnitt durch einen Schwenkmotor
- Fig. 3-6: Scheibendichtung mit profilierter Seitenfläche
- Fig. 7-10: Scheibendichtung mit Zuflusskanal in Seitenfläche der Beilage
- Fig. 11-14: Scheibendichtung mit Druckmittelverteilungskanalsystem in der Beilage

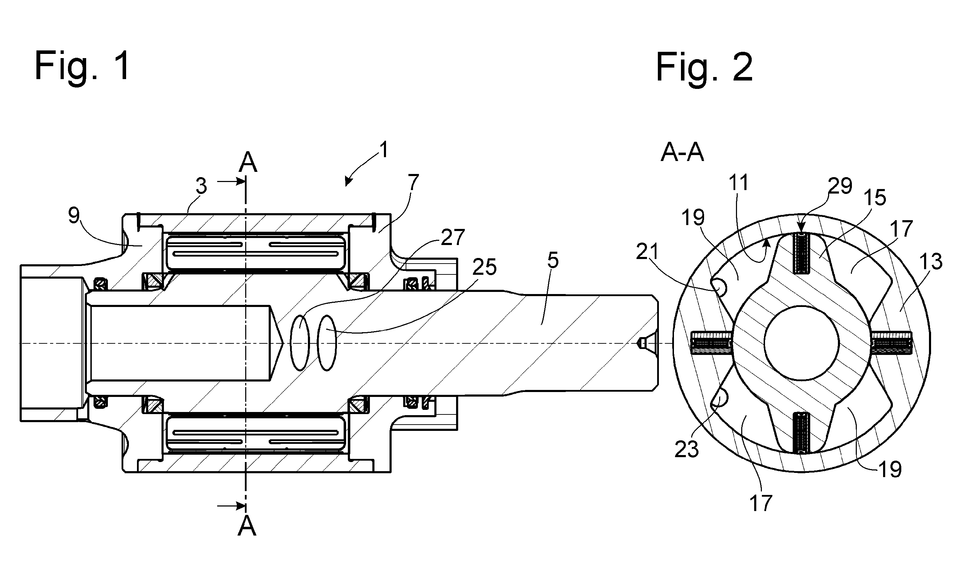

Die Fig. 1 zeigt ein Aggregat in der Bauform eines Schwenkmotor 1 in einer Längsschnittdarstellung mit einem Zylinder 3, in dem eine Motorwelle 5 drehbar gelagert ist. Mit dem Zylinder 3 sind endseitig Deckel 7 und 9 verschweißt. An der Innenwandung 11 des Zylinders 3 sind zwei Rippen 13 (Fig. 2) angeordnet, die mit Flügeln 15 der Motorwelle 5, dem Zylinder 3 und den Deckeln 7; 9 vier Arbeitskammern 17; 19 bilden, wobei Arbeitskammern mit gleicher Bezugsziffer über ein Druckmittelverteilungssystem ausgehend von Hydraulikanschlüssen 21; 23 und Querkanälen 25; 27 innerhalb der Motorwelle miteinander verbunden sind. Die Zahl der Arbeitskammern ist abhängig vom aufzubringenden Drehmoment und vom notwendigen Schenkwinkel des Schwenkmotor.

Innerhalb der Flügel und Rippen sind Dichtungen 29 in der Bauform von Scheibendichtungen eingelegt, die jeweils benachbarte Arbeitskammern 17; 19 voneinander trennen.

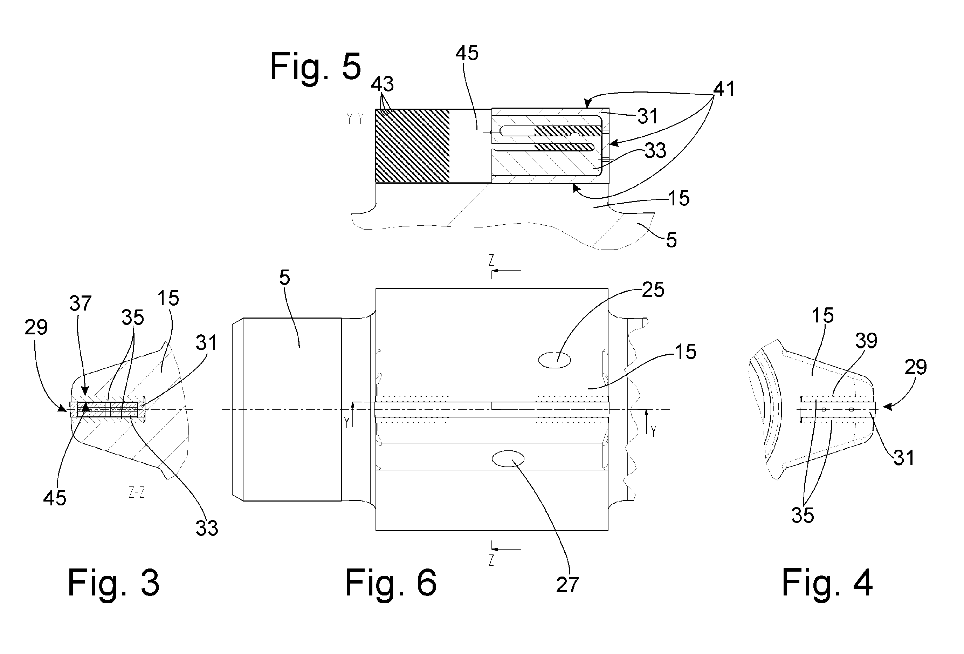

Die Figuren 3 und 4 zeigen die Dichtung 29 in der Motorwelle 5, wobei der identische Aufbau auch in den Rippen 13 des Zylinders 3 vorliegt. Wie man eindeutig erkennt, ist das gesamte geschichtete Paket, umfassend einen Dichtungsrahmen 31 mit einem Dichtungsinnenteil 33, sowie Beilagen 35 in Schwenkrichtung der Motorwelle 5 spielfrei angeordnet. Die gesamte Scheibendichtung29 sitzt ortsfest innerhalb einer Nut 37 des Flügels 15. Das Dichtungsinnenteil 33 kann aus mehreren geschichteten Innenteilen bestehen.

Der Dichtungsrahmen 31 soll zusätzlich zu der Vorspannkraft des elastischen Dichtungsinnenteils 33 vom Druck des Druckmediums in den Arbeitskammern 17, 19 vorgespannt werden.

Als Druckmittelzufuhrquerschnitt dienen Zuflusskanäle 39 in Stirnflächen 41 der scheibenförmigen Beilagen 35. Die Zuflusskanäle 39 sind in die Stirnflächen der scheibenförmigen Beilagen bevorzugt eingeprägt. Des Weiteren sind mehrere Anschlusskanäle 43, die ein Druckmittelverteilungskanalsystem bilden, in einer zum Dichtungsinnenteil weisenden Seitenfläche 45 ausgeführt. Die Anschlusskanäle 43 und die Zuflusskanäle 39 sind dabei miteinander am Übergang von der Stirnfläche 41 und Seitenfläche 45 verbunden. Dieser Sachverhalt wird durch die Darstellungen gemäß den Fig. 5 und 6 verdeutlicht. Im linken Teil des Halbschnitts der Fig. 5 ist die Profilierung des Druckverteilungskanalsystems zu erkennen, das im rechten Halbschnitt von einem Dichtungsinnenteil 33 teilweise abgedeckt wird.

Während des Schwenkmotorbetriebs kann das Druckmedium über die Zuflusskanäle 39 in den Stirnflächen 41 und den Anschlusskanälen 43 in die Ebene zwischen einer Beilage 35 und dem benachbarten Dichtungsinnenteil 33 einströmen und damit die Vorspannung des Dichtungsrahmens 31 zusätzlich zur Wirkung des Dichtungsinnenteil unterstützen.

Die scheibenförmigen Beilagen 35 sind auf beiden Seitenflächen 45 profiliert. Ebenso erstrecken sich die Zuflusskanäle 39 über alle Übergänge der Beilage 35, so dass die Beilage in einer beliebigen Seitenlage zum Dichtungsinnenteil 33 montiert werden kann, ohne dass dadurch die Druckmittelversorgung beeinflusst wird.

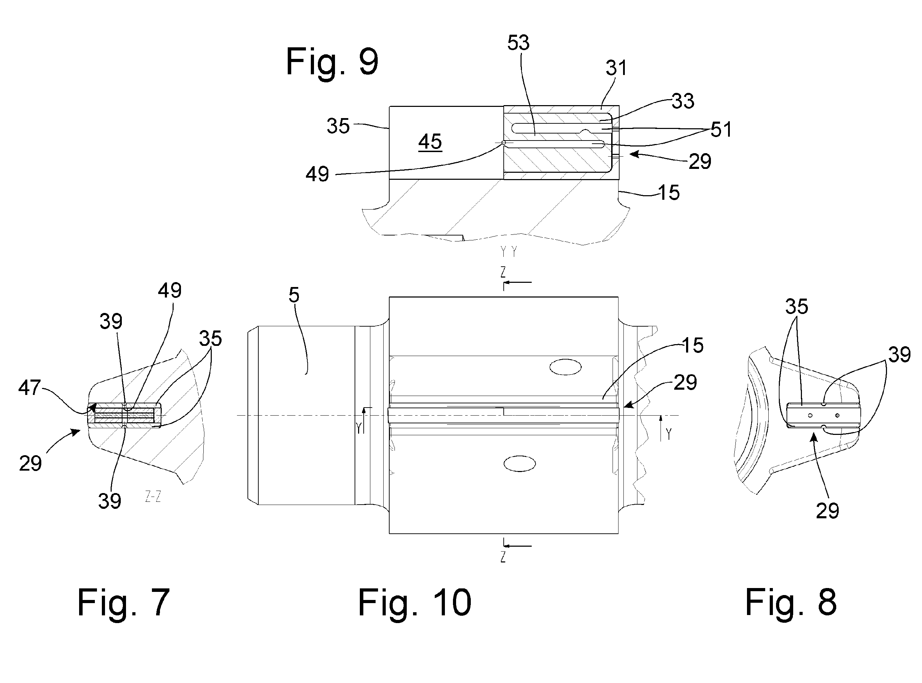

In der Variante gemäß den Figuren 7-10 verfügt die scheibenförmige Beilage 35 über eine Nut in einer Seitenfläche 45, die in Richtung einer Nutseitenfläche 47 eines Flügels oder einer Rippe weist. Die Nut in der Seitenfläche stellt einen Zuflusskanal 39 dar, der von einer Arbeitskammer 17; 19 mit Druckmedium gespeist wird. Jede Rippe 13 oder Flügel 15 ist geringfügig kürzer als die axiale Erstreckung einer Arbeitskammer, so dass stirnseitig Druckmedium in die Nut bzw. den Zuflusskanal 39 einströmen kann. Die Nut ist, wie die Fig.7; 9 zeigen, mit mindestens einer Druckmittelzufuhröffnung 49 verbunden, die das Druckmedium in eine Aussparung 51 des Dichtungsinnenteils 33 strömen lässt.

Zusätzlich oder anstatt der Nut 39 in einer Seitenfläche 45 der Beilage 35 kann auch eine Nutseitenwand 47 mit mindestens einer Nut 39 ausgeführt sein, die Druckmedium zu der Druckmittelzuführöffnung strömen lässt. Mehrere Nuten lassen sich beispielsweise durch eine Rändelung der Nutseitenwand 47 sehr leicht herstellen.

Grundsätzlich besteht die Wahlmöglichkeit, dass die Druckmittelzufuhröffnung 49 in der scheibenförmigen Beilage 45 in einer Aussparung 51 des Dichtungsinnenteils 33 mündet oder von einem Steg 53 des Dichtungsinnenteils ganz oder teilweise abgedeckt wird. Je größer die Abdeckwirkung, umso geringer ist die innere Leckage im Schwenkmotor. Je weniger die Druckmittelzufuhröffnung 49 jedoch vom Dichtungsinnenteil 33 abgedeckt wird, umso schneller erfolgt die druckabhängige Aktivierung der Scheibendichtung bzw. des Dichtungsrahmens.

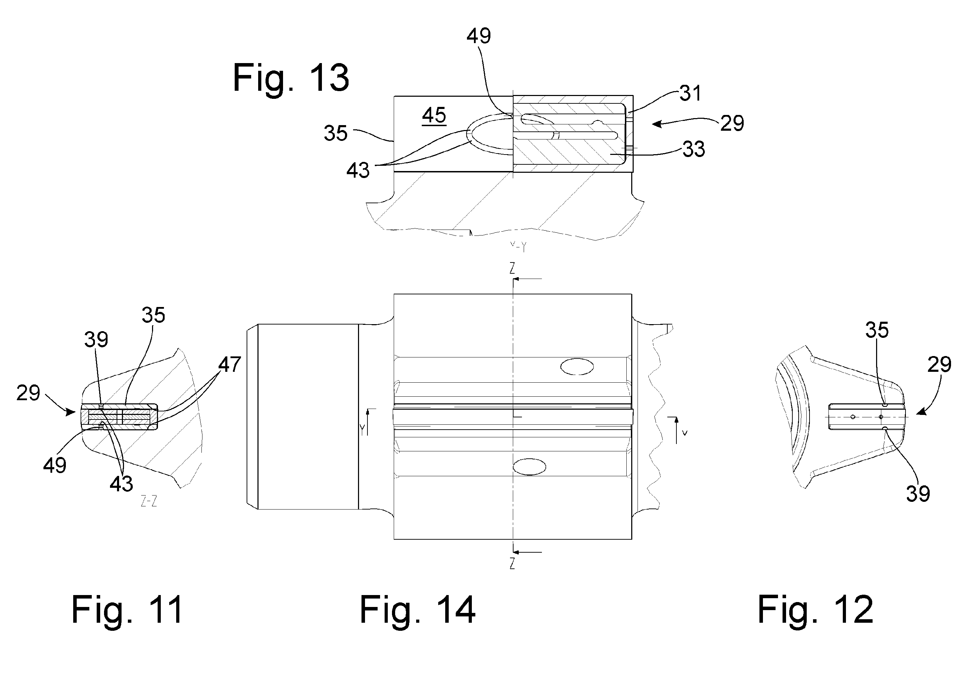

Die Variante nach den Fig. 11-14 zeigt eine Kombination der Ausführungen nach den Fig. 3 -6 mit den Fig. 7-10. Aus den Figuren 3 bis 6 wurde das Prinzip der Druckmittelverteilung in der Ebene zwischen einer scheibenförmigen Beilage 35 und dem Dichtungsinnenteil 33 übernommen. Anstatt einer Prägung der Beilage 35 an den Seitenflächen kommen in diesem Fall zwei miteinander verbundene eliptische Anschlusskanäle 43 zur Anwendung, die wiederum über eine Druckmittelzufuhröffnung 49 mit Druckmedium gespeist werden. Des Weiteren kommen in Längsrichtung verlaufenden Nuten 39 an den zu den Nutseitenflächen 47 weisenden Seitenflächen 45 der Beilagen 35 zur Anwendung. Bei dieser Variante kann dem Dichtungsrahmen 31 das Druckmedium mit einem großen Volumenstrom zugeführt werden.

### Bezugszeichenliste

- 1: Schwenkmotor
- 3: Zylinder
- 5: Motorwelle
- 7; 9: Deckel
- 11: Innenwandung
- 13: Rippen
- 15: Flügel
- 17; 19: Arbeitskammern
- 21; 23: Hydraulikanschlüsse
- 25; 27: Querkanäle
- 29: Scheibendichtung
- 31: Dichtungsrahmen
- 33: Dichtungsinnenteil
- 35: Beilage
- 37: Nut
- 39: Zuflusskanäle
- 41: Stirnfläche
- 43: Anschlusskanäle
- 45: Seitenfläche
- 47: Nutseitenfläche
- 49: Druckmittelzufuhröffnung
- 51: Aussparung
- 53: Steg

## Patentansprüche

1. Scheibendichtung (29) innerhalb einer Nut (37), insbesondere für einen Schwenkmotor, umfassend einen Dichtungsrahmen (31), in dem mindestens ein Dichtungsinnenteil (33) angeordnet ist, das den Dichtungsrahmen (31) vorspannt, wobei an mindestens einer Seite zu der Baueinheit Dichtungsrahmen-Dichtungsrinnenteil (31; 33) eine scheibenförmige Beilage (35) angeordnet ist, wobei die Scheibendichtung (29) durch Ausnutzung eines Druckmediums zusätzlich vorgespannt wird,
**dadurch gekennzeichnet,**
**dass** ein geschichtetes Paket umfassend den Dichtungsrahmen (31) mit Dichtungsinnenteil (33) sowie der mindestens einen scheibenförmigen Beilage (35) in Schwenkrichtung innerhalb der Nut (37) spielfrei angeordnet ist, so dass die gesamte Scheibendichtung (29) ortsfest innerhalb der Nut (37) sitzt, wobei über die mindestens eine Beilage (35) mindestens ein Druckmittelzufuhrquerschnitt (39; 43; 49) zur Baueinheit Dichtungsrahmen-Dichtungsinnenteil (31; 33) vorliegt.

2. Scheibendichtung nach Anspruch 1,
**dadurch gekennzeichnet,**
**dass** eine Nutseitenwand der Nut (37) mit mindestens einem Anschlusskanal (43) ausgeführt ist, die an den Druckzufuhrquerschnitt (39; 43; 49) der Beilage angeschlossen ist.

3. Scheibendichtung nach Anspruch 2,
**dadurch gekennzeichnet,**
**dass** der mindestens eine Anschlusskanal (43) von einer Rändelung einer Nutseitenfläche (47) gebildet wird.

4. Scheibendichtung nach Anspruch 1,
**dadurch gekennzeichnet,**
**dass** die scheibenförmige Beilage (35) in der zum Dichtungsinnenteil (33) weisenden Seitenfläche (45) mindestens einen Anschlusskanal (43) aufweist.

5. Scheibendichtung nach Anspruch 4,
**dadurch gekennzeichnet,**
**dass** die scheibenförmige Beilage (35) an beiden parallel zur Baueinheit Dichtungsrahmen-Dichtungsinnenteil (31; 33) verlaufenden Seitenfläche (45) mit mindestens einem Anschlusskanal (43) ausgeführt ist.

6. Scheibendichtung nach den Ansprüchen 2 oder 5,
**dadurch gekennzeichnet,**
**dass** mehrere Anschlusskanäle (43) miteinander verbunden sind und ein Druckmittelverteilungskanalsystem bilden.

7. Scheibendichtung nach Anspruch 1,
**dadurch gekennzeichnet,**
**dass** mindestens eine Stirnfläche (41) der scheibenförmigen Beilage (35) mindestens einen Zuflusskanal (39) zum Dichtungsrahmen (31) aufweist.

8. Scheibendichtung nach Anspruch 7,
**dadurch gekennzeichnet,**
**dass** der mindestens eine Zuflusskanal (39) in der Stirnfläche (41) geprägt ist.
